# EUROPÄISCHE PATENTSCHRIFT

(11) **EP 1 074 154 B1**
(45) Veröffentlichungstag und Bekanntmachung des Hinweises auf die Patenterteilung: **18.06.2003**
(21) Anmeldenummer: 99945744.3
(22) Anmeldetag: 07.04.1999
(51) Int. Cl.: H04Q 3/00

(54) **DURCHFÜHRUNG VON DIENSTEN EINES INTELLIGENTEN NETZES UNTER NUTZUNG EINES DATENNETZES**
IMPLEMENTING SERVICES OF AN INTELLIGENT NETWORK BY USING A DATA NETWORK
EXECUTION DE SERVICES D'UN RESEAU INTELLIGENT AU MOYEN D'UN RESEAU DE DONNEES

(30) Priorität: 22.04.1998 DE 19818006
(43) Veröffentlichungstag der Anmeldung: 07.02.2001
(73) Patentinhaber: SIEMENS AKTIENGESELLSCHAFT, 80333 München (DE)
(72) Erfinder: BECHER, Reinhard, D-81245 München (DE)
(86) Internationale Anmeldenummer: DE9901063
(87) Internationale Veröffentlichungsnummer: WO99055097

(56) Entgegenhaltungen:
- WO-A-97/22209
- WO-A-97/31491
- WO-A-97/35416
- WO-A-98/04065
- US-A- 5 572 583

## Beschreibung

Die Erfindung betrifft ein Peripheriegerät, welches für interaktiven Nachrichtenaustausch mit Teilnehmern eines Telefonsystems eingerichtet ist, welches ein Intelligentes Netz mit einem Dienstesteuerknoten für die Verwaltung und Steuerung von Intelligenten Diensten und zumindest ein mit dem Intelligenten Netz verknüpftes Telefonnetz aufweist, wobei zumindest einer der Teilnehmer des Telefonsystems für die Nutzung eines oder mehrerer Intelligenten Dienste berechtigt ist.

Weiters betrifft die Erfindung ein Telefonsystem, welches ein Intelligentes Netz mit einem Dienstesteuerknoten für die Verwaltung und Steuerung von Intelligenten Diensten für Teilnehmer des Intelligenten Netzes und zumindest ein mit dem Intelligenten Netz verknüpftes Telefonnetz aufweist und in welchem ein oder mehrere für interaktiven Nachrichtenaustausch mit Teilnehmern des Telefonsystems eingerichtete Peripheriegeräte vorgesehen sind, wobei zumindest einer der Teilnehmer des Telefonsystems für die Nutzung eines oder mehrerer Intelligenten Dienste berechtigt ist.

Gleichermaßen bezieht sich die Erfindung auf ein Verfahren zur Durchführung eines von einem Intelligenten Netz angebotenen Intelligenten Dienstes, bei welchem Nachrichten interaktiv zwischen einem Peripheriegerät eines Telefonsystems und einem Teilnehmer des Telefonsystems, welcher für die Nutzung zumindest des Intelligenten Dienstes berechtigt ist, ausgetauscht werden, wobei das Telefonsystem neben dem Intelligenten Netz zumindest ein mit dem Intelligenten Netz verknüpftes Telefonnetz und das Intelligente Netz einen Dienstesteuerknoten für die Verwaltung und Steuerung von Intelligenten Diensten aufweist.

Telekommunikationsnetze, insbesondere Telefonnetze, sind als Festnetze oder Mobilfunknetze, wie das bekannte GSM-Netz (global system for mobile communications) ausgebildet und weisen untereinander vernetzte Vermittlungseinrichtungen auf, welche dem Aufbau und Erhalt von Gesprächsverbindungen zwischen den Teilnehmern eines Netzes dienen. Damit auch Verbindungen zwischen Teilnehmern verschiedener Netze möglich sind, sind die Telefonnetze basierend auf entsprechenden Kooperationsvereinbarungen miteinander verknüpft und bilden dann ein übergeordnetes Telefonsystem.

In einem solchen Telefonsystem ist ein Teilnehmer jeweils einem bestimmten Netz, seinem Heimatnetz, zugeordnet, in dem die Verwaltung der Teilnehmerdaten und z.B. die Vergebührung erfolgt. Das Konzept des Heimatnetzes ist insbesondere für mobile Teilnehmer wichtig, welche netzübergreifend 'roamen', d.h. in den Einzugsbereich eines anderen Mobilfunknetzen wechseln und dort weiterhin Gespräche führen können, soweit hierfür in einem sogenannten Roaming-Abkommen zwischen dem Heimatnetz des Teilnehmers und dem besuchten Netz vorgesorgt ist.

US 5,572,583, "Advanced Intelligent Network with intelligent Peripherals interfaced to the integrated Services Control Point" beschreibt ein Intelligentes Netz mit dazu gehörigen Intelligenten Periphäriegeräten zum Nachrichtenaustausch mit den Teilnehmern eines Telefonnetzes, einem Dienstesteuerknoten zur Verwaltung und Steuerung von Intelligenten Diensten in diesem Telefonnetz und über Vermittlungsstationen an dieses Telefonnetz angeschlossene Teilnehmer, die zur Benutzung von Diensten des intelligenten Netzes berechtigt sind. Die Periphäriegeräte sind weiterhin durch ein zweites Datennetz miteinander und mit dem Dienstesteuerknoten zum Informationsaustausch verbunden.
Die in der Druckschrift beschriebene Lösung bezieht sich jedoch lediglich auf die Festnetz-Telefonie, es gibt jedoch spezielle Probleme, die sich ausschließlich bei der Nutzung von intelligenten Diensten in Mobilfunknetzen und daraus resultierenden Interaktionen mit Peripbäriegeräten ergeben.

In Mobilfunknetzen sind an die Vermittlungseinrichtungen jeweils Basisstationen angeschlossen, mit deren Hilfe über eine Luftschnittstelle Telekommunikationsendgeräte anschließbar sind. Diese Endgeräte ermöglichen einem Teilnehmer eines Mobilnetzes den Netzzugang. Die Vermittlungseinrichtungen sind darüber hinaus auch für den Übergang zu weiteren Netzen, z.B. einem Datenübertragungsnetz oder einem Festnetz, eingerichtet.

Aus dem GSM-Netz ist es weiters bekannt, innerhalb eines Mobilnetzes Speichereinheiten, in denen jeweils teilnehmerspezifische Daten zu den netzeigenen Diensten gespeichert sind, zu verwenden. Eine dieser Speichereinheiten realisiert das sogenannte Heimatregister (HLR, home location register), das sich in der Regel an einem fest definierten Ort befindet und in dem die der Registrierung des Teilnehmers zugrundeliegenden Daten abgelegt sind. Für den mobilen Teilnehmer und der mit ihm in Verbindung stehenden Basisstation ist eine Speichereinheit als sogenanntes Besucherregister (VLR, visiting location register) vorgesehen, in dem sich die Teilnehmer- und Verbindungs-spezifischen Daten abgelegt sind und das gewöhnlich in einem Mobil-Vermittlungsknoten (MSSP, mobile service switching point) realisiert ist. Je nach Aufenthaltsort des mobilen Teilnehmers wechselt auch die Speichereinheit für das Besucherregister bzw. der Vermittlungsknoten.

Damit besteht für einen Teilnehmer eines Mobilnetzes die Möglichkeit zu "roamen", d.h. zwischen Zellen, also Einzugsbereichen der Basisstationen, unter Umständen auch während eines Gespräches zu wechseln. Der Wechsel zwischen den Zellen wird, wie bei dem Beispiel GSM-Netz bekannt, durch hierfür eingerichtete Protokolle gewährleistet, über welche die Teilnehmerdaten beispielsweise zwischen einem dem Teilnehmer fest zugeordneten Heimatregister und dem Besuchsregister der jeweils aktuellen Zelle ausgetauscht werden.

Für die Kommunikation zwischen den Vermittlungseinheiten und den Dienstesteuerknoten werden zur Zeit verschiedene Protokolle eingesetzt, so etwa INAP-Protokolle (intelligent network application part) wie z.B. das Core INAP nach der ETSI-Spezifikation 300 374-1, Juli 1994, des Europäischen Normeninstituts für Telekommunikation (ETSI) oder das MAP-Protokoll (mobile application part) des GSM-Standards. Diese Protokolle werden üblicherweise netzintern verwendet. Weiterhin ist aus ETSI-Spezifikationen eine sogenannte CAMEL Plattform (customized application for mobile network enhanced logic) bekannt, mit der die Unterstützung von zusätzlichen anbieterspezifischen Diensten für Teilnehmer auch netzübergreifend ermöglicht werden soll.

In einem sogenannten Intelligenten Netz (IN) sind neben den Grunddiensten, wie z.B. dem Telefon- und Facsimiledienst eines Telefonnetzes, weitere Dienste eingerichtet, die von einem Teilnehmer des Intelligenten Netzes angesprochen werden können. Diese Dienste - im folgenden als Intelligente Dienste bezeichnet - können beispielsweise Zusatzdienste zu den Grunddiensten sein, z.B. eine Anrufumleitung, verwaltungsorientierte Dienste, z.B. ein Abfrage der aufgelaufenen Gesprächsgebühren eines Teilnehmers, oder auf die Grunddienste aufbauende Anwendungsdienste sein, z.B. ein Bankbuchungsdienst, bei dem über Telefon Buchungsvorgänge und andere Banktransaktionen durchgeführt und protokolliert werden. Für die Verwaltung und Durchführung der Dienste ist im Intelligenten Netz ein Dienstesteuerknoten, welcher gewöhnlich als SCP (service control point) oder, insbesondere im CAMEL-Standard, als CSE (CAMEL service environment) bezeichnet wird und im allgemeinen von den Vermittlungseinrichtungen des Intelligenten Netzes verschieden ist. In einem als GSM-Netz realisierten Intelligenten Netz kann der Dienstesteuerknoten auch die Funktionen des Heimatregisters übernehmen. Der CAMEL-Standard legt für die Signalisierung zwischen einem Mobil-Vermittlungsknoten und einem Dienstesteuerknoten ein CAP-Protokoll (CAMEL application part) einen Satz von Nachrichten fest, der auch netzübergreifend verwendet werden kann.

Besondere Intelligente Dienste verlangen eine Teilnehmerinteraktion, bei welcher ein interaktiver Nachrichtenaustausch stattfindet, beispielsweise dem Teilnehmer eine Ansage eingespielt wird oder der Teilnehmer zu einer Dateneingabe aufgefordert und diese entgegengenommen wird. Gemäß dem Core INAP sind sogenannte Intelligente Peripheriegeräte (IP) vorgesehen, die den Intelligenten Diensten für die Durchführung der Teilnehmerinteraktionen eine Anzahl von Diensthilfsfunktionen (SRF, service resource functions) zur Verfügung stellen; im folgenden werden sie der Kürze halber Peripheriegeräte genannt. Die Anbindung eines Peripheriegerätes an einen Vermittlungsknoten des Netzes erfolgt über ein Protokoll der Zwischenamtsignalisierung oder der Teilnehmersignalisierung.

In vielen Intelligenten Netzen ist die Inanspruchnahme von Intelligenten Diensten für einen Teilnehmer nur innerhalb seines Heimatnetzes möglich. In den CAMEL-Standards ist die Nutzung Intelligenter Dienste auch für "roamende", also sich in einem Fremdnetz aufhaltende, Teilnehmer vorgesehen. Jedoch müssen Gespräche von roamenden Teilnehmern, wenn der Dienst eine Teilnehmerinteraktion verlangt, in das Heimatnetz umgelenkt werden, da das entsprechende Peripheriegerät nur im Heimatnetz angesprochen werden kann. Dies ist oft umständlich, zeitaufwendig und führt auch zu vermeidbar hohen Gebühren seitens des Teilnehmers.

Grundsätzlich ist es auch denkbar, ein Peripheriegerät des Heimatnetzes in einem fremden Netz aufzustellen, wo es seine Diensthilfsfunktionen dem Fremdnetz zur Verfügung stellt. Dies setzt jedoch voraus, daß die Protokolle des Peripheriegerätes und der Fremdnetz-Vermittlung übereinstimmen, daß das Fremdnetz die CAMEL-Standards unterstützt und, nicht zuletzt, daß der Betreiber des Fremdnetzes überhaupt gewillt ist, ein "fremdes" Gerät in sein Netz aufzunehmen. Dies verlangt ein hohes Maß an Kooperation, das weit über ein Roaming-Abkommen hinausgeht und für das eine Bereitschaft der beteiligten Netzbetreiber infolge des damit verbundenen Aufwandes, falls überhaupt, lediglich innerhalb einer Telekommunikationsallianz zu erwarten ist.

Ähnliches gilt für eine andere Lösung, bei der Peripheriegeräte gemeinschaftlich von verschiedenen Netzanbietern und/oder Dienstanbietern genutzt werden. Die Diensthilfsfunktionen solcher Peripheriegeräte müssen jedoch im allgemeinen mehrere Sprachen unterstützen, und unter den beteiligten Betreibern abgesprochen und zumindest teilweise offengelegt sein, so daß auch hierbei hohe Kooperationsanforderungen mit den oben genannten Konsequenzen resultieren.

Es ist daher Aufgabe der Erfindung, die Durchführung von Teilnehmerinteraktionen zu ermöglichen, bei denen die genannten Nachteile vermieden werden und insbesondere die Anforderungen an die betreffenden Peripheriegeräte und Netzknoten möglichst weitgehend gelockert sind.

Die Aufgabe wird ausgehend von einem Peripheriegerät der eingangs genannten Art gelöst, welches einen Zugang zu einem für den Austausch digitaler Information eingerichteten Datennetz aufweist und dazu eingerichtet ist, über eine in dem Datennetz zu dem Dienstesteuerknoten, welcher ebenfalls einen Datennetzzugang aufweist, hergestellte Verbindung Informationen betreffend einen Intelligenten Dienst für einen dienstberechtigten Teilnehmer zu beziehen, wobei der Dienstesteuerknoten aus den erreichbaren Peripheriegeräten eines anhand des Aufenthaltsbereiches des Teilnehmers und des gewünschten Dienstes auswählt.

Diese Lösung hat unter anderem den Vorteil, daß für die Datenübertragung zwischen Peripheriegerät und Dienstesteuerknoten ein beliebiges gemeinsames Protokoll verwendet werden kann. Vorteilhaft ist weiters, daß für Verbindungen über das Internet gewöhnlicherweise geringe Gebühren verrechnet werden, oft nur für die Ortseinwahl, was dem Teilnehmer gerade beim Aufenthalt in Fremdnetzen zugute kommt.

In einer besonders zweckmäßigen Ausführungsform ist das Peripheriegerät dazu eingerichtet, vor einem interaktiven Nachrichtenaustausch mit dem dienstberechtigten Teilnehmer und/oder währenddessen über die Datennetzverbindung Informationen für die Durchführung des Nachrichtenaustauschs zu beziehen. Dies ermöglicht eine flexible Gestaltung des Informationsaustausches in Abhängigkeit von dem aktuellen Ablauf der Teilnehmerinteraktion.

In einer nützlichen Variante ist das Peripheriegerät dazu eingerichtet, nach Beendigung des interaktiven Nachrichtenaustauschs mit dem dienstberechtigten Teilnehmer an den Dienstesteuerknoten eine Quittungsnachricht zu senden, welche in dem Nachrichtenaustausch ermittelte Daten enthält. Dies ermöglicht es, Ergebnisdaten, Berichte od. dgl. betreffend die Teilnehmerinteraktion an den Dienstesteuerknoten zurückzuliefern.

Es ist weiters günstig, insbesondere für Teilnehmerinteraktionen mit Teilnehmern in einem mit dem Intelligenten Netz verknüpften Telefonnetz, wenn das Peripheriegerät dem betreffenden Telefonnetz des Telefonsystems zugeordnet ist.

Zweckmäßigerweise ist das Peripheriegerät dazu eingerichtet, selbst die Herstellung der Verbindung zu dem Dienstesteuerknoten gegenüber dem Datennetz anzufordern.

In einer weiteren Ausführungsform, in der die Nutzung fremder Peripheriegeräte besondere Vorteile erbringt, ist das Peripheriegerät einem Mobilsystem für die Herstellung von Funkverbindungen für mobile Teilnehmer zugeordnet.

Hierbei ist günstigerweise das Mobilsystem als GSM-Netz realisiert.

Die oben gestellte Aufgabe wird weiters ausgehend von einem Telefonsystem der eingangs genannten Art durch ein Telefonsystem mit zumindest einem Peripheriegerät gelöst, welches erfindungsgemäß einen Zugang zu einem für den Austausch digitaler Information eingerichteten Datennetz aufweist und dazu eingerichtet ist, über eine in dem Datennetz zu dem Dienstesteuerknoten, welcher ebenfalls einen Datennetzzugang aufweist, hergestellte Verbindung Informationen betreffend einen Intelligenten Dienst für einen dienstberechtigten Teilnehmer zu beziehen.

Die Vorzüge dieser Lösung entsprechen denen des erfindungsgemäßen Peripheriegerätes.

In einer besonders zweckmäßigen Ausführungsform des erfindungsgemäßen Telefonsystems ist der dienstberechtigte Teilnehmer vorübergehend oder ständig Teilnehmer eines mit dem Intelligenten Netz verknüpften Telefonnetzes des Telefonsystems.

Es ist weiters günstig, wenn der Dienstesteuerknoten dazu eingerichtet ist, aus den Peripheriegeräten, welche für den Dienstesteuerknoten über das Datennetz erreichbar und für das Telefonnetz nutzbar sind, eines anhand des Aufenthaltsbereich des Teilnehmers und den gewünschten Intelligenten Dienst auszuwählen. Auf diese Weise kann eine Auswahl des jeweils geeigneten Peripheriegeräts gezielt nach dem angeforderten Dienst bzw. der erforderlichen Teilnehmerinteraktion erfolgen.

Vorteilhafterweise ist hierbei der Dienstesteuerknoten dazu eingerichtet, dem Telefonnetz eine Nachricht zu senden, welche eine Zielinformation zur Adressierung des Peripheriegeräts und eine Korrelationsidentität aufweist, welche eine den Intelligenten Dienst betreffende Erstinformation für das Peripheriegerät enthält.

Das Datennetz kann weiters günstigerweise ein Computernetz, z.B. das Internet, ist. Computernetze wie das Internet bieten großflächige, ja sogar weltumspannende, Verbindungsmöglichkeiten auf vergleichsweise einfache und kostensparende Weise an.

In einer weiteren Ausführungsform, in der die Nutzung fremder Peripheriegeräte besondere Vorteile erbringt, ist das Telefonsystem als Mobilsystem für die Herstellung von Funkverbindungen für mobile Teilnehmer eingerichtet, sowie der dienstberechtigte Teilnehmer ein solcher mobiler Teilnehmer.

Hierbei ist das Telefonsystem günstigerweise als GSM-Netz realisiert.

Die oben genannte Aufgabe wird gleichermaßen von einem Verfahren der eingangs genannten Art gelöst, bei welchem Informationen betreffend den Intelligenten Dienst zwischen dem Peripheriegerät und dem Dienstesteuerknoten über eine in einem für den Austausch digitaler Information eingerichteten Datennetz hergestellte Verbindung ausgetauscht werden.

Die hierdurch erbrachten Vorteile stimmen mit denen des erfindungsgemäßen Peripheriegerätes überein.

Besondere, zweckmäßige Merkmale des erfindungsgemäßen Verfahrens gehen aus den Ansprüchen 20 bis 27 hervor.

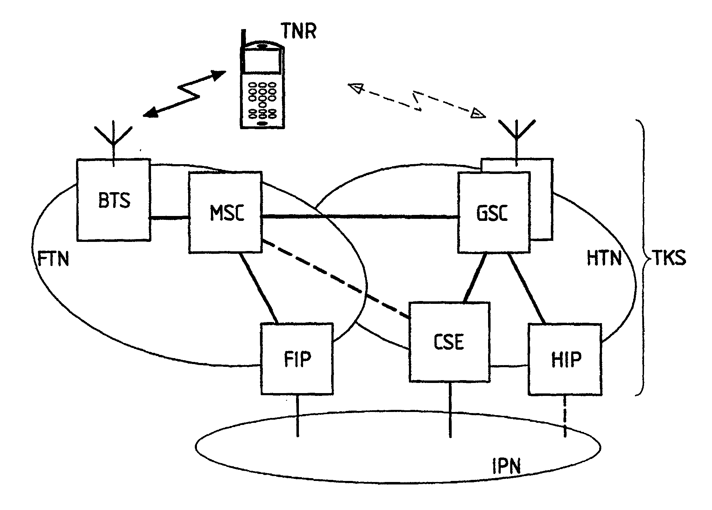

Die Erfindung wird im folgenden anhand eines Ausführungsbeispieles betreffend eines GSM-Netzsystems näher erläutert, dessen wesentlichen Komponenten in der beigefügten Figur schematisch gezeigt sind.

Das beispielhafte GSM-Netzsystem TKS besteht aus dem Zusammenschluß mehrerer GSM-Netze, von denen in der Figur zwei Netze HTN,FTN gezeigt sind, nämlich das Heimatnetz HTN des Teilnehmers TNR und ein weiteres Netz FTN, in dessen Einzugsbereich der Teilnehmer TNR bzw. dessen Mobiltelefon sich gerade aufhält und das im folgenden Fremdnetz genannt werden soll. Der Teilnehmer TNR ist in dem Fremdnetz FTN über eine Funkverbindung zu einer Basisstation BTS, welche an eine Mobil-Vermittlungsstelle MSC angeschlossen ist, eingebucht. Seitens des Heimatnetzes HTN ist ein Dienstesteuerknoten CSE dargestellt, in welchem unter anderem die permanenten teilnehmerspezifischen Daten für die Nutzung der Netzdienste gespeichert sind, sowie eine sogenannte Gateway-Vermittlungsstelle GSC, die der Verknüpfung der beiden Netze HTN,FTN miteinander dient. Darüber hinaus können natürlich noch andere Netzverknüpfungen bestehen, z.B. eine Direktleitung zwischen dem Dienstesteuerknoten CSE und der Vermittlungsstelle MSC. Vermittlungseinrichtungen des Heimatnetz HTN sind selbstverständlich ebenfalls vorhanden, sind jedoch für die Darstellung der Erfindung belanglos und daher in der Figur lediglich angedeutet. Ebenfalls ist ein in dem Fremdnetz FTN eventuell bestehender Dienstesteuerknoten für die Erfindung ohne Bedeutung.

Es sei an dieser Stelle angemerkt, daß das Ausführungsbeispiel keine Beschränkung der Erfindung auf Mobilfunknetze darstellen soll. Vielmehr können die folgenden Erörterungen vom Fachmann ohne weiteres auf andere Telefonnetzsysteme TKS übertragen werden, insbesondere Festnetze, z.B. mit einem Teilnehmer, welchem von verschiedenen Endgeräten TNR aus, auch von außerhalb seines Heimatnetzes, Zugriff auf dieselbe Dienstkonfiguration gewährt wird. Freilich muß hierfür das Heimatnetz HTN zur Unterstützung Intelligenter Dienste eingerichtet, also ein Intelligentes Netz sein.

Der Teilnehmer TNR wähle in dem Ausführungsbeispiel eine Rufnummer; die Verbindungsanforderung gelangt zu der Vermittlungsstelle MSC. Aufgrund z.B. der gewählten Rufnummer, einer Teilnehmersubskription hinsichtlich eines Intelligenten Dienst erkennt die Vermittlungsstelle MSC, daß eine dienstbezogene Anfrage an den Dienstesteuerknoten CSE des Heimatnetzes des Teilnehmers TNR erforderlich ist. Deshalb baut die Vermittlungsstelle MSC eine Signalisierungsverbindung zu dem Dienstesteuerknoten CSE auf und sendet entsprechende Anfrage. Hierfür kann ein INAP-Protokoll oder ein CAP-Protokoll verwendet werden - letzteres ist günstiger, da das CAP-Protokoll für die netzübergreifende Signalisierung vorgesehen ist. Der Dienstesteuerknoten CSE bestimmt aus den Daten der Anfrage, z.B. einen darin enthaltenen Diensteschlüssel (service key), den gewünschten Intelligenten Dienst und den Aufenthaltsbereich des Teilnehmers. Diese "Dienstort"-Informationen dienen später zur Auswahl eines geeigneten Peripheriegerätes.

Wird seitens des Dienstesteuerknoten CSE festgestellt, daß zur Dienstabwicklung eine Teilnehmerinteraktion erforderlich ist, wird anhand der "Dienstort"-Informationen ein geeignetes Peripheriegerät bestimmt, zu welchem von der Vermittlungsstelle MSC eine Verbindung herstellbar ist. Zufolge der Erfindung kann dies ein dem Heimatnetz HTN fremdes Peripheriegerät FIP sein, welches über einen Zugang zu dem Internet IPN oder einem anderen Datennetz verfügt. Das Peripheriegerät FIP kann, wie in der Figur dargestellt, an die Vermittlungsstelle MSC direkt oder über andere Netzknoten angeschlossen sein. Es ist auch möglich, daß das Peripheriegerät FIP in einem (in der Figur nicht dargestellten) dritten Netz des Netzsystems TKS angesiedelt ist und die Verbindung zur Vermittlungsstelle MSC ebenfalls netzübergreifend ist; je nach den gegebenen Verhältnissen, kann dies günstiger sein, als zu einem Peripheriegerät HIP des Heimatnetzes HTN zu verbinden. (Ob das Heimatnetz-Peripheriegerät HIP einen Datennetzanschluß aufweist, ist in diesem Zusammenhang belanglos.)

Der Dienstesteuerknoten CSE sendet nun an die Vermittlungsstelle MSC eine Nachricht mit einer Zielrufnummer, die für die Adressierung des Peripheriegeräts FIP bestimmt ist. Die Zielrufnummer besteht aus der "Rufnummer" des Peripheriegeräts FIP sowie günstigerweise einer Erweiterung, z.B. nach Art einer Rufnummer mit Nebenstellen-Erweiterung für einen untergeordneten Anschluß einer Nebenstellenanlage. Die Erweiterung dient als sogenannte Korrelationsidentität, welche wie weiter unten beschrieben als Erstinformation für das Peripheriegerät FIP dient.

Falls nach der Teilnehmerinteraktion das Gespräches fortgeführt werden soll, z.B. mit einer Weiterverbindung zu einer in der Interaktion bestimmten Rufnummer, wird in dem Dienstesteuerknoten CSE ein entsprechendes Fortführungsmerkmal gesetzt, z.B. das sogenannte DP9B-R des GSM-Netzes. Das Fortführungsmerkmal wird der Vermittlungsstelle MSC zusammen mit der Nachricht der Zielrufnummer übermittelt, z.B. in einer RequestReportBCSM-Nachricht des GSM-Netzes.

Anhand der vom Dienstesteuerknoten CSE empfangenen Nachrichten verbindet die Vermittlungsstelle MSC den Teilnehmer TNR nun an das Peripheriegerät FIP. Die Korrelationsidentität wird von dem Peripheriegerät FIP empfangen und zwischengespeichert, sowie aus ihr eine Adressierung und/oder Steuerinformation für jene Diensthilfsfunktion abgeleitet, die dem ausgewählten Intelligenten Dienst entspricht. Falls die Informationen der Korrelationsidentität für die Durchführung der Teilnehmerinteraktion ausreichend sind und zu Ende der Interaktion keine Daten von dem Peripheriegerät FIP zu dem Dienstesteuerknoten CSE zurückzusignalisieren sind, wird die Interaktion nach bekannter Art seitens des Fremdnetzes FTN beendet. Ist dagegen, und das ist der für die Erfindung interessierende Fall, ein Austausch zusätzlicher Dienstedaten zwischen dem Peripheriegerät FIP und dem Dienstesteuerknoten CSE erforderlich, so erfolgt dieser Informationsaustausch erfindungsgemäß über eine Datenverbindung des Internet IPN.

Eine Voraussetzung für diesen Datenaustausch über Internet ist, daß sowohl das Peripheriegerät FIP als auch der Dienstesteuerknoten CSE des Heimatnetzes HTN an das Internet angeschlossen sind und über dieses miteinander in eine Verbindung mit ausreichender Datenaustauschkapazität eintreten können. Seitens des Peripheriegeräts FIP bestehen im allgemeinen die Datenverbindung (zum Dienstesteuerknoten CSE über das Internet IPN) und die Interaktionsverbindung (zur Vermittlungsstelle MSC bzw. zum Teilnehmer TNR) gleichzeitig. Anstelle des Internet kann auch ein beliebiges anderes Datennetz IPN, z.B. ein Computernetz oder ein Paketnetz, verwendet werden, das einen verbindungsgesteuerten Austausch digitaler Daten ermöglicht.

Die Datenverbindung kann permanent sein oder eigens für die Interaktion aufgebaut werden, wobei im letzteren Fall im allgemeinen der Aufbau von Seiten des Peripheriegeräts FIP initiiert wird. Für die Datenübertragung zwischen Peripheriegerät FIP und Dienstesteuerknoten CSE kann ein beliebiges gemeinsames Protokoll verwendet werden; eine Signalisierung mit dem ISUP- oder DSS.1-Protokoll ist nicht erforderlich. Allerdings ist es eine sinnvolle, wenn auch nicht zwingende, Anforderung, daß die Verbindung in dem Internet bzw. Datennetz IPN mit einem realzeitfähigen Protokoll hergestellt wird, um eine rasche Datenübertragung zu ermöglichen, die ja parallel zu der Teilnehmerinteraktion erfolgen muß. Beispielsweise könnte ein INAP- oder CAP-Protokoll mit dem Datennetz-eigenen Protokoll, z.B. dem TCP/IP-Protokoll des Internet, als darunterliegende Transportprotokollschicht verwendet werden. Vorteilhaft ist weiters, daß für Verbindungen über das Internet gewöhnlicherweise geringe Gebühren verrechnet werden, oft nur für die Ortseinwahl, was dem Teilnehmer gerade beim Aufenthalt in Fremdnetzen zugute kommt.

Die über die Datenverbindung dem Peripheriegerät FIP von dem Dienstesteuerknoten CSE zur Verfügung gestellten zusätzlichen Dienstedaten hängen naturgemäß von dem jeweils genutzten Intelligenten Dienst ab und können beispielsweise Informationen für einen PlayAnnouncement-Befehl, einen PromptAndCollect-Befehl sein, sowie die dem Peripheriegerät FIP bereits implizit gesendete Korrelationsidentität. Die Dienstedaten können von dem Peripheriegerät FIP angefordert oder auch von dem Dienstesteuerknoten CSE ohne Anforderung gesendet werden - letzteres ist möglich und sinnvoll, da der Dienstesteuerknoten CSE durch den vorhergehenden Dialog mit der Vermittlungsstelle MSC ausreichende Informationen für ein korrektes Senden der vom Peripheriegerät FIP benötigten Dienstedaten hat. Das Peripheriegerät FIP verwendet die erhaltenen Dienstedaten für die Durchführung der Teilnehmerinteraktion.

Die Teilnehmerinteraktion des Intelligenten Dienstes kann auf diese Weise spezifische Ansagen in einer gewünschten teilnehmerspezifischen Sprache - im allgemeinen die der Ansagen des Heimatnetzes HTN - oder die Anforderung der Eingabe von Information seitens des Teilnehmers beinhalten, wobei vorteilhafterweise das für den Teilnehmer TNR von dem Heimatnetz HTN her gewohntes bzw. spezifisches Aus/Eingabeformat verwendet werden kann. Falls erforderlich, z.B. durch einen besonderen Verlauf der Teilnehmereingabe, werden während und/oder am Ende der Teilnehmerinteraktion zwischen dem Peripheriegerät FIP und dem Dienstesteuerknoten CSE weitere Dienstedaten ausgetauscht; im besonderen kann am Ende der Interaktion das Peripheriegerät FIP dem Dienstesteuerknoten CSE über die Datenverbindung eine Ergebnis- oder Quittungsnachricht senden. Die Nachrichten, in denen diese weiteren Daten enthalten sind, können zusätzlich mit der Korrelationsidentität gekennzeichnet sein, um die eindeutige Zuordnung zu der Teilnehmerinteraktion zu ermöglichen. Dies kann erforderlich sein, weil das Peripheriegerät FIP im allgemeinen mehrere Teilnehmerinteraktion gleichzeitig (oder im 'time sharing') durchführen kann.

Nach Beendigung der Teilnehmerinteraktion wird die Verbindung von der Vermittlungsstelle MSC zu dem Peripheriegerät FIP beendet. Falls in der Vermittlungsstelle MSC das oben erwähnte Fortführungsmerkmal, z.B. das DP9B-R, gesetzt ist, sendet sie eine entsprechende Meldung, z.B. eine ERB-Nachricht ('event report'), an den Dienstesteuerknoten CSE, der sodann unter Verwendung der von der Vermittlungsstelle MSC und/oder von dem Peripheriegerät FIP erhaltenen Informationen den weiteren Gesprächsverlauf nach bekannter Art steuert.

Die Datenverbindung in dem IPN wird - ausgenommen es handelt sich um eine permanente Verbindung - nach Beendigung des Datenaustauschs zwischen dem Peripheriegerät FIP und dem Dienstesteuerknoten CSE beendet, wobei sie je nach den Gegebenheiten des Datenaustauschs von dem Peripheriegerät oder Dienstesteuerknoten ausgelöst wird. Die Datenverbindung kann auch seitens des Dienstesteuerknoten CSE vorläufig aufrecht gehalten werden, falls dies für den betreffenden Dienst günstiger erscheint, z.B. weil nachfolgende Teilnehmerinteraktionen zu erwarten sind. Nach dem Auslösen der Datenverbindung wird die Korrelationsidentität in dem Peripheriegerät FIP und dem Dienstesteuerknoten CSE freigegeben.

## Patentansprüche

1. Telefonsystem (TKS), das
- ein Intelligentes Netz (HTN) mit einem Dienstesteuerknoten (CSE) für die Verwaltung und Steuerung von Intelligenten Diensten und
- zumindest ein mit dem Intelligenten Netz (HTN) verknüpftes Telefonnetz (FTN) aufweist und
- in welchem ein oder mehrere für interaktiven Nachrichtenaustausch mit Teilnehmern des Telefonsystems eingerichtete Peripheriegeräte (HIP,FIP) vorgesehen sind,
wobei
- zumindest einer der Teilnehmer (TNR) des Telefonsystems für die Nutzung eines oder mehrerer Intelligenten Dienste berechtigt ist, und
- zumindest ein Peripheriegerät (FIP), das einen Zugang zu einem für den Austausch digitaler Information eingerichteten Datennetz (IPN) aufweist und dazu eingerichtet ist, über eine in dem Datennetz (IPN) zu dem Dienstesteuerknoten (CSE), welcher ebenfalls einen Datennetzzugang aufweist, hergestellte Verbindung Informationen betreffend einen Intelligenten Dienst für einen dienstberechtigten Teilnehmer (TNR) zu beziehen,
**dadurch gekennzeichnet, daß**
der Dienstesteuerknoten (CSE) dazu eingerichtet ist, aus den Peripheriegeräten (FIP), welche für den Dienstesteuerknoten (CSE) über das Datennetz (IPN) erreichbar und für das Telefonnetz (FTN) nutzbar sind, eines anhand des Aufenthaltsbereich des Teilnehmers (TNR) und des gewünschten Intelligenten Dienstes auszuwählen.

2. Telefonsystem (TKS) nach Anspruch 1,
**dadurch gekennzeichnet, daß** der Dienstesteuerknoten (CSE) dazu eingerichtet ist, dem Telefonnetz (FTN) eine Nachricht zu senden, welche eine Zielinformation zur Adressierung des Peripheriegeräts (FIP) und eine Korrelationsidentität aufweist, welche eine den Intelligenten Dienst betreffende Erstinformation für das Peripheriegerät (FIP) enthält.

3. Telefonsystem (TKS) nach Anspruch 1 oder 2,
**dadurch gekennzeichnet, daß** das Peripheriegerät (FIP) dazu eingerichtet ist, vor einem interaktiven Nachrichtenaustausch mit dem dienstberechtigten Teilnehmer (TNR) und/oder währenddessen über die Datennetzverbindung Informationen für die Durchführung des Nachrichtenaustauschs zu beziehen.

4. Telefonsystem (TKS) nach Anspruch 3,
**dadurch gekennzeichnet, daß** das Peripheriegerät (FIP) dazu eingerichtet ist, nach Beendigung des interaktiven Nachrichtenaustauschs mit dem dienstberechtigten Teilnehmer (TNR) an den Dienstesteuerknoten (CSE) eine Quittungsnachricht zu senden, welche in dem Nachrichtenaustausch ermittelte Daten enthalt.

5. Telefonsystem (TKS) nach einem der Ansprüche 1 bis 4,
**dadurch gekennzeichnet, daß** das Peripheriegerät (FIP) einem mit dem Intelligenten Netz (HTN) verknüpften Telefonnetz (FTN) des Telefonsystems zugeordnet ist.

6. Telefonsystem (TKS) nach einem der Ansprüche 1 bis 5,
**dadurch gekennzeichnet, daß** das Peripheriegerät (FIP) dazu eingerichtet ist, die Herstellung der Verbindung zu dem Dienstesteuerknoten (CSE) gegenüber dem Datennetz (IPN) anzufordern.

7. Telefonsystem (TKS) nach einem der Ansprüche 1 bis 6,
**dadurch gekennzeichnet, daß** das Datennetz (IPN) ein Computernetz, z. B. das Internet, ist.

8. Telefonsystem (TKS) nach einem der Ansprüche 1 bis 7,
**dadurch gekennzeichnet, daß** es als Mobilsystem für die Herstellung von Funkverbindungen, für mobile Teilnehmer eingerichtet und der dienstberechtigte Teilnehmer (TNR) ein mobiler Teilnehmer ist.

9. Verfahren zur Durchführung eines von einem Intelligenten Netz (HTN) angebotenen Intelligenten Dienstes, bei dem Nachrichten interaktiv zwischen einem Peripheriegerät
(FIP) eines Telefonsystems (TKS) und einem Teilnehmer (TNR) des Telefonsystems, welcher für die Nutzung zumindest des Intelligenten Dienstes berechtigt ist, ausgetauscht werden, wobei das Telefonsystem (TKS) neben dem Intelligenten Netz (HTN) zumindest ein mit dem Intelligenten Netz (HTN) verknüpftes Telefonnetz (FTN) und das Intelligente Netz (HTN) einen Dienstesteuerknoten (CSE) für die Verwaltung und Steuerung von Intelligenten Diensten aufweist, und
Informationen betreffend den Intelligenten Dienst zwischen dem Peripheriegerät (FIP) und dem Dienstesteuerknoten (CSE) über eine in einem für den Austausch digitaler Information eingerichteten Datennetz (IPN) hergestellte Verbindung ausgetauscht werden
**dadurch gekennzeichnet, daß**
vor der Durchführung des Intelligenten Dienstes bzw. interaktiven Nachrichtenaustauschs seitens des Dienstesteuerknotens CSE aus den Peripheriegeräten (FIP), die für den Dienstesteuerknoten (CSE) über das Datennetz (IPN) erreichbar und für das Telefonnetz (FTN) nutzbar sind, anhand des Aufenthaltsbereich des Teilnehmers (TNR) und des gewünschten Intelligenten Dienstes eines ausgewählt wird.

10. Verfahren nach Anspruch 9,
**dadurch gekennzeichnet, daß** dem Telefonnetz (FTN) seitens des Dienstesteuerknoten (CSE) eine Nachricht gesendet wird, welche eine Zielinformation zur Adressierung des Peripheriegeräts (FIP) und eine Korrelationsidentität aufweist, welche dem Peripheriegerät (FIP) als eine den Intelligenten Dienst betreffende Erstinformation dient.

11. Verfahren nach Anspruch 9 oder 10,
**dadurch gekennzeichnet, daß** die Informationen über die Datennetz-Verbindung vor dem interaktiven Nachrichtenaustausch mit dem dienstberechtigten Teilnehmer (TNR) und/oder währenddessen ausgetauscht werden und für die Durchführung des Nachrichtenaustauschs ausgewertet werden.

12. Verfahren nach Anspruch 11,
**dadurch gekennzeichnet, daß** nach Beendigung des interaktiven Nachrichtenaustauschs mit dem dienstberechtigten Teilnehmer (TNR) eine Quittungsnachricht, welche in dem Nachrichtenaustausch ermittelte Daten enthält, an den Dienstesteuerknoten (CSE) gesendet wird.

13. Verfahren nach einem der Ansprüche 9 bis 12,
**dadurch gekennzeichnet, daß** der dienstberechtigte Teilnehmer (TNR) den Intelligenten Dienst als Teilnehmer eines mit dem Intelligenten Netz (HTN) verknüpften Telefonnetzes (FTN) des Telefonsystems nutzt.

14. Verfahren nach einem der Ansprüche 9 bis 13,
**dadurch gekennzeichnet, daß** die Informationen betreffend den Intelligenten Dienst über ein Computernetz (IPN), z.B. das Internat, ausgetauscht werden.

15. Verfahren nach einem der Ansprüche 9 bis 14,
**dadurch gekennzeichnet, daß** es in einem Mobilsystem (TKS) für die Herstellung von Funkverbindungen für mobile Teilnehmer (TNR) ausgeführt wird.

## Claims

1. Telephone system (TKS) which
- has an intelligent network (HTN) with a service control node (CSE) for managing and controlling intelligent services, and
- at least one telephone network (FTN) which is linked to the intelligent network (HTN) and
- in which one or more peripheral units (HIP, FIP) which are set up for the interactive exchange of messages with subscribers of the telephone system are provided,
- at least one of the subscribers (TNR) of the telephone system being authorized to use one or more intelligent services, and
- at least one peripheral unit (FIP), which has an access to a data network (IPN) which is set up for the exchange of digital information, and said peripheral unit (FIP) is set up to obtain, via a connection which is established in the data network (IPN) to the service control node (CSE) which also has a data network access, information relating to an intelligent service for a service-authorized subscriber (TNR), **characterized in that** the service control node (CSE) is set up to select, from the peripheral units (FIP) which can be accessed by the service control node (CSE) via the data network (IPN) and can be used by the telephone network (FTN), one peripheral unit by reference to the area in which the subscriber (TNR) is located and to the desired intelligent service.

2. Telephone system (TKS) according to Claim 1, **characterized in that** the service control node (CSE) is set up to transmit to the telephone network (FTN) a message which has an item of destination information for addressing the peripheral unit (FIP) and a correlation identity which contains a first information item, relating to the intelligent service, for the peripheral unit (FIP).

3. Telephone system (TKS) according to Claim 1 or 2, **characterized in that** the peripheral unit (FIP) is set up to obtain, via the data network connection, information for the execution of an interactive exchange of messages, before the execution of the exchange of messages with the service-authorized subscriber (TNR) and/or during said exchange.

4. Telephone system (TKS) according to Claim 3, **characterized in that** the peripheral unit (FIP) is set up to transmit, after the termination of the interactive exchange of messages with the service-authorized subscriber (TNR), an acknowledgement message to the service control node (CSE), said acknowledgement message containing data which are determined in the exchange of messages.

5. Telephone system (TKS) according to one of Claims 1 to 4, **characterized in that** the peripheral unit (FIP) is assigned to a telephone network (FTN), linked to the intelligent network (HTN), of the telephone system.

6. Telephone system (TKS) according to one of Claims 1 to 5, **characterized in that** the peripheral unit (FIP) is set up to request from the data network (IPN) the establishment of the connection to the service control node (CSE).

7. Telephone system (TKS) according to one of Claims 1 to 6, **characterized in that** the data network (IPN) is a computer network, for example the Internet.

8. Telephone system (TKS) according to one of Claims 1 to 7, **characterized in that** it is set up as a mobile system for the establishment of radio connections for mobile subscribers, and the service-authorized subscriber (TNR) is a mobile subscriber.

9. Method for implementing an intelligent service which is made available by an intelligent network (HTN) and in which messages are exchanged interactively between a peripheral unit (FIP) of a telephone system (TKS) and a subscriber (TNR) of the telephone system, which subscriber is authorized to use at least the intelligent service, the telephone system (TKS) having, in addition to the intelligent network (HTN), at least one telephone network (FTN) which is linked to the intelligent network (HTN), and the intelligent network (HTN) having a service control node (CSE) for managing and controlling intelligent services, and
information relating to the intelligent service is exchanged between the peripheral unit (FIP) and the service control node (CSE) via a connection which is established in a data network (IPN) which is set up for the exchange of digital information,
**characterized in that**, before the intelligent service or interactive exchange of messages is carried out, the service control node (CSE) selects, from the peripheral units (FIP) which can be accessed by the service control node (CSE) via the data network (IPN) and can be used by the telephone network (FTN), one peripheral unit by reference to the area in which the subscriber (TNR) is located and to the desired intelligent service.

10. Method according to Claim 9, **characterized in that** the service control node (CSE) transmits to the telephone network (FTN) a message which has an item of destination information for addressing the peripheral unit (FIP) and a correlation identity which is used by the peripheral unit (FIP) as a first information item relating to the intelligent service.

11. Method according to Claim 9 or 10, **characterized in that** the information is exchanged via the data network connection before the messages are exchanged interactively with the service-authorized subscriber (TNR) and/or during said exchange, and said information is evaluated for the execution of the exchange of messages.

12. Method according to Claim 11, **characterized in that** after the termination of the interactive exchange of messages with the service-authorized subscriber (TNR), an acknowledgement message, which contains data which are determined in the exchange of messages, is transmitted to the service control node (CSE).

13. Method according to one of Claims 9 to 12, **characterized in that** the service-authorized subscriber (TNR) uses the intelligent service as a subscriber of a telephone network (FTN), linked to the intelligent network (HTN), of the telephone system.

14. Method according to one of Claims 9 to 13, **characterized in that** the information relating to the intelligent service is exchanged via a computer network (IPN), for example the Internet.

15. Method according to one of Claims 9 to 14, **characterized in that** it is carried out in a mobile system (TKS) for the establishment of radio connections for mobile subscribers (TNR).

## Revendications

1. Système téléphonique (TKS),
- qui comporte un réseau intelligent (HTN) ayant un noeud de commande de services (CSE) pour la gestion et la commande de services intelligents, et
- qui comporte au moins un réseau téléphonique (FIN) relié au réseau intelligent (HTN), et
- dans lequel il est prévu un ou plusieurs périphériques (HIP, FIP) conçus pour l'échange interactif d'informations avec des abonnés du système téléphonique,
- au moins l'un des abonnés (TNR) du système téléphonique étant autorisé à utiliser un ou plusieurs services intelligents, et
- au moins un périphérique (FIP) comportant un accès à un réseau de données (IPN) conçu pour l'échange d'informations numériques et étant conçu pour rapporter par l'intermédiaire d'une liaison, établie dans le réseau de données (IPN) vers le noeud de commande de services (CSE) qui a également un accès au réseau de données, des informations concernant un service intelligent pour un abonné (TNR) autorisé à accéder au service,
**caractérisé par le fait que** le noeud de commande de services (CSE) est conçu pour sélectionner à l'aide de la zone de séjour de l'abonné (TNR) et du service intelligent souhaité l'un des périphériques (FIP) joignables pour le noeud de commande de services (CSE) via le réseau de données (IPN) et utilisables pour le réseau téléphonique (FTN).

2. Système téléphonique (TKS) selon la revendication 1,
**caractérisé par le fait que** le noeud de commande de services (CSE) est conçu pour envoyer au réseau téléphonique (FTN) un message qui comporte une information de destination pour l'adressage du périphérique (FIP) et une identité de corrélation qui contient pour le périphérique (FIP) une première information concernant le service.

3. Système téléphonique (TKS) selon la revendication 1 ou 2,
**caractérisé par le fait que** le périphérique (FIP) est conçu pour rapporter, avant un échange interactif d'informations avec l'abonné (TNR) autorisé à accéder au service et/ou pendant cet échange, par l'intermédiaire de la liaison de réseau de données, des informations pour la mise en oeuvre de l'échange d'informations.

4. Système téléphonique (TKS) selon la revendication 3,
**caractérisé par le fait que** le périphérique (FIP) est conçu pour envoyer au noeud de commande de services (CSE), après la fin de l'échange interactif d'informations avec l'abonné (TNR) autorisé à accéder au service, un message d'accusé de réception qui contient des données déterminées dans l'échange d'informations.

5. Système téléphonique (TKS) selon l'une des revendications 1 à 4,
**caractérisé par le fait que** le périphérique (FIP) est associé à un réseau téléphonique (FTN), relié au réseau intelligent (HTN), du système téléphonique.

6. Système téléphonique (TKS) selon l'une des revendications 1 à 5,
**caractérisé par le fait que** le périphérique (FIP) est conçu pour demander l'établissement de la liaison vers le noeud de commande de services (CSE) par rapport au réseau de données (IPN).

7. Système téléphonique (TKS) selon l'une des revendications 1 à 6,
**caractérisé par le fait que** le réseau de données (IPN) est un réseau informatique, par exemple l'Internet.

8. Système téléphonique (TKS) selon l'une des revendications 1 à 7,
**caractérisé par le fait qu'**il est conçu comme système mobile pour l'établissement de liaisons radio pour des abonnés mobiles et que l'abonné (TNR) autorisé à accéder au réseau est un abonné mobile.

9. Procédé pour la mise en oeuvre d'un service intelligent offert par un réseau intelligent (HTN), dans lequel des informations sont échangées de manière interactive entre un périphérique (FIP) d'un système téléphonique (TKS) et un abonné (TNR) du système téléphonique, lequel abonné est autorisé à utiliser au moins le service intelligent, le système téléphonique (TKS) comportant outre le réseau intelligent (HTN) au moins un réseau téléphonique (FTN) relié au réseau intelligent (HTN) et le réseau intelligent (HTN) comportant un noeud de commande de services (CSE) pour la gestion et la commande de services intelligents, et
des informations concernant le service intelligent sont échangées entre le périphérique (FIP) et le noeud de commande de services (CSE) par l'intermédiaire d'une liaison établie dans un réseau de données (IPN) conçu pour l'échange d'informations numériques,
**caractérisé par le fait que**, avant la mise en oeuvre du service intelligent c'est-à-dire de l'échange interactif d'informations, du côté du noeud de commande de services (CSE), on sélectionne à l'aide de la zone de séjour de l'abonné (TNR) et du service intelligent souhaité l'un des périphériques (FIP) joignables par l'intermédiaire du réseau de données (IPN) pour le noeud de commande de services (CSE) et utilisables pour le réseau téléphonique (FTN).

10. Procédé selon la revendication 9,
**caractérisé par le fait que**, du côté du noeud de commande de services (CSE), il est envoyé au réseau téléphonique (FTN) un message qui comporte une information de destination pour l'adressage du périphérique (FIP) et une identité de corrélation qui sert au périphérique (FIP) comme première information concernant le service intelligent.

11. Procédé selon la revendication 9 ou 10,
**caractérisé par le fait que** les informations sont échangées par l'intermédiaire de la liaison de réseau de données avant l'échange interactif d'informations avec l'abonné (TNR) autorisé à accéder au service et/ou pendant cet échange et sont évaluées pour la mise en oeuvre de l'échange d'informations.

12. Procédé selon la revendication 11,
**caractérisé par le fait que**, après la fin de l'échange interactif d'informations avec l'abonné (TNR) autorisé à accéder au réseau, on transmet au noeud de commande de services (CSE) un message d'accusé de réception qui contient des données déterminées dans l'échange d'informations.

13. Procédé selon l'une des revendications 9 à 12,
**caractérisé par le fait que** l'abonné (TNR) autorisé à accéder au réseau utilise le service intelligent comme abonné d'un réseau téléphonique (FTN), relié au réseau intelligent (HTN), du système téléphonique.

14. Procédé selon l'une des revendications 9 à 13,
**caractérisé par le fait que** les informations concernant le service intelligent sont échangées par l'intermédiaire d'un réseau informatique (IPN), par exemple l'Internet.

15. Procédé selon l'une des revendications 9 à 14,
**caractérisé par le fait qu'**il est réalisé dans un système mobile (TKS) pour l'établissement de liaisons radio pour des abonnés mobiles (TNR).
